# NEUE EUROPÄISCHE PATENTSCHRIFT

(11) **EP 1 010 641 B2**
(45) Veröffentlichungstag und Bekanntmachung des Hinweises auf die Entscheidung über den Einspruch: **13.12.2006**
(45) Hinweis auf die Patenterteilung: 04.09.2002
(21) Anmeldenummer: 98811233.0
(22) Anmeldetag: 16.12.1998
(51) Int. Cl.: B65D 77/20

(54) **Deckel zum Verschliessen von Behältern**
Lid for closing a container
Couvercle pour la fermeture de récipients

(43) Veröffentlichungstag der Anmeldung: 21.06.2000
(73) Patentinhaber: Alcan Technology & Management AG, 8212 Neuhausen am Rheinfall (CH)
(72) Erfinder: Jud, Wilfried, D-78224 Singen (DE)
(74) Vertreter: Wiedmer, Edwin

(56) Entgegenhaltungen:
- EP-A- 0 089 746
- EP-A- 0 106 362
- EP-A- 0 115 033
- EP-A- 0 149 180
- EP-A- 0 383 989
- EP-A- 0 514 803
- EP-A- 0 613 773
- EP-A- 0 687 557
- EP-A- 0 767 210
- EP-A- 0 781 652
- EP-A- 0 798 108
- WO-A-98/26931
- DE-A- 1 234 005
- DE-A- 2 717 866
- DE-A- 4 035 981
- JP-A- 7 047 643
- US-A- 5 342 684

## Beschreibung

Vorliegende Erfindung betrifft Deckel zum Verschliessen von Behältern mittels einer Siegelnaht, wobei die Deckel, bezogen auf einen Behälter, an dem die Deckel an gewendet werden, ein Trägermaterial, mit einer nach aussen weisenden Bedruckung, und eine nach innen weisende geprägte Siegelschicht enthalten.

Es ist bekannt, Behälter, wie beispielsweise tief- oder streckgezogene Behälter oder anderweitig geformte Behälter, an deren Öffnung mit einer ebenen ringförmigen Schulter zu versehen und solche Behälter, insbesondere nach dem Befüllen, zu bedeckeln, wobei der Deckel vollflächig auf der Schulter aufliegt und beispielsweise durch Siegeln oder Kleben an der Schulter trennfest und dichtend befestigt wird.

Die Deckel werden beispielsweise aus einem endlos vorliegenden Deckelmaterial ausgestanzt und gestapelt. Die Deckelstapel werden einer Verpackungsmaschine zugeführt und die vereinzelten oder entstapelten Deckel fortlaufend auf die bereits befüllten Behälter aufgesiegelt. Die mit einer Siegelschicht versehenen Deckel werden mittels eines Siegelwerkzeuges im Schulterbereich des Behälters auf den Behälterrand aufgesiegelt. Das Vereinzeln oder Entstapeln der Dekkel durch Entnahme vom Deckelstapel wird von den Verpakkungsmaschinen nicht immer zuverlässig durchgeführt, da die aufeinanderliegenden Deckel ungewünscht gegenseitig aneinander haften können. Beispielsweise durch eine Prägung des Deckelmaterials lässt sich der Effekt des aneinander Haftens verhindern. Prägungen am Deckelmaterial wirken sich jedoch negativ auf das Druckbild auf der Aussenseite der Dekkel aus.

Das Deckelmaterial kann aus verschiedensten Materialien, je nach den gestellten Anforderungen, sein. Typische Beispiele sind Metallfolien, die ein- oder beidseitig mit Kunststoff beschichtet sein können. Andere Deckelmaterialien enthalten oder bestehen aus Kunststoffen in Form von Monofolien oder Mehrschichtlaminaten. Weitere Deckelmaterialien können aus cellulosehaltigen Materialien, wie Zellglas oder Papier sein. Eingesetzt werden auch Laminate aus Metall- und Kunststofffolien. Um das Deckelmaterial mit dem Behälterrand zu versiegeln, wird das Deckelmaterial vollflächig mit einer Siegelschicht, wie einem Siegellack oder einer Siegelfolie, versehen, wobei die Siegelschicht beispielsweise wenigstens auf der, an der fertigen Verpakkung nach innen weisenden Seite, d.h. gegen den Behälterinnenraum weisend, angebracht ist.

Das Deckelmaterial dient im weiteren als Informations- und Werbeträger. Aus diesem Grunde wird das Deckelmaterial auf seiner Aussenseite in der Regel mit einem Druck versehen. Die Bedruckung kann auf der obersten, an einem fertigen Behälter nach aussen weisenden Schicht als sog. Schöndruck, angeordnet sein. Die Bedruckung kann auch mit einem Schutzlack oder mit einer Schutzfolie abgedeckt sein oder die oberste Schicht des Deckelmaterials kann aus transparenten Material sein und auf der Rückseite bedruckt sein (sog. Konterdruck). Die Druckbilder können ein- oder mehrfarbig sein und in einer Druckmaschine aufgebracht werden.

Nachteilig bei bekannten Deckelmaterialien ist das Anbringen der Prägung. Die Prägung ist notwendig, damit aus dem Deckelmaterial erzeugte Einzeldeckel, die in Form eines Deckelstapels in die Verpackungsmaschine eingespiesen werden, sich überhaupt vereinzeln, d.h. Stück für Stück dem Stapel entnehmen und auf den Behälter aufsiegeln lassen. Da das Dekkelmaterial geprägt werden muss, geben die daraus gefertigten Deckel das Druckbild nur unvorteilhaft wieder.

Die EP-A 0 798 108 beschreibt ein Deckelelement für Verpackungen aus einer geprägten und einer ungeprägten Folie, wobei die geprägte Folie in einem separaten Arbeitsgang geprägt und anschliessend mit der ungeprägten Folie über eine Kleberschicht verbunden worden ist.

Aufgabe vorliegender Erfindung ist es diese Nachteile zu überwinden und einen Deckel vorzuschlagen, welcher zuverlässig aus einem Deckelstapel vereinzelt werden kann und dennoch auf dessen Oberfläche das Druckbild hochwertig wiedergegeben wird.

Erfindungsgemäss wird dies dadurch erreicht, dass die Siegelschicht eine durch Extrusionsbeschichtung oder Coextrusionsbeschichtung auf das Trägermaterial aufgebrachte Extrusionsschicht oder Coextrusionsschicht ist und die Siegelschicht an derfreiliegenden Seite eine Prägung mit einer Rauhtiefe von bis zu 50 µm aufweist und die freiliegende, die Bedruckung zeigende, Seite des Trägermaterials glatt und ungeprägt ist.

Die Rauhtiefe ist beispielsweise von 3 bis 30 µm, zweckmässig 3 bis 2 µm und vorteilhaft 5 bis 10 µm. Die Rauhtiefe ist insbesondere nicht tiefer als die Dicke der Siegelschicht.

Die Siegelschicht kann eine Coextrusionsschicht aus einem Haftvermittler und/oder einen Primer und einem siegelbaren thermoplastischen Kunststoff enthalten. Sinngemäss liegt der Haftvermittler und/oder der Primer auf dem Trägermaterial und der siegelbare thermoplastische Kunststoff seinerseits auf dem Haftvermittler und/oder Primer.

Die Siegelschicht weist z.B. ein Flächengewicht von 30 g/m² und kleiner, zweckmässig von 2 g/m² bis 20 g/m², vorteilhaft von 2 g/m² bis 15 g/m² und insbesondere von 5 g/m² bis 10 g/m² auf.

Die Siegelschicht kann beispielsweise ein Coextrudat sein mit einen Haftvermittler als Extrusionsschicht mit einem Flächengewicht von 2 bis 10 g/m², zweckmässig von 2 g/m² bis 8 g/m², und einer Extrusionsschicht aus einem thermoplastischen Kunststoff mit einem Flächengewicht von 3 g/m² bis 25 g/m² und insbesondere von 5 g/m² bis 10 g/m², aufweisen.

Das Trägermaterial kann eine Monofolie aus Kunststoff oder ein Mehrschichtverbund aus zwei oder mehreren Kunststoffschichten oder eine Metallfolie oder ein Mehrschichtverbund aus wenigstens einer Metallfolie und wenigstens einer Kunststofffolie sein. Das Trägermaterial kann auch aus cellulosehaltigem Material bestehen oder cellulosehaltiges Material enthalten. Das cellulosehaltige Material kann ein- oder beidseitig beispielsweise mit Kunststoff beschichtet sein oder kann metallisiert sein oder kann einseitig eine Kunststoffschicht und auf der anderen Seite eine metallisierte Schicht aufweisen. Die Kunststoffe des Trägermaterials können beispielsweise Polyolefine, wie Polyethylene oder Polypropylene, Polyamide, Polyethylenterephthalate oder Polyvinylchloride sein. Als Metallfolien können beispielsweise Stahl- oder Aluminiumfolien angewendet werden. Als cellulosehaltige Materialien können beispielsweise Papiere oder Halbkarton zur Anwendung gelangen. Weitere Trägermaterialien sind z. B. Zellgläser. Das Trägermaterial kann eine Dicke von beispielsweise 12 - 500 µm aufweisen, wobei die Trägermaterialien aus Kunststoffolien oder aus Metallfolien oder aus Metall- und Kunststoffolien bevorzugt eine Dicke von 12 -150 µm aufweisen, während Deckelmaterialien enthaltend cellulosehaltige Materialien beispielsweise eine Dicke von 40 -500 µm aufweisen. Die Trägermaterialien sind insbesondere derart flexibel, dass sie zu Rollenware gewickelt werden können.

Das Trägermaterial kann auch eine Sperrschicht gegen Gase, Dämpfe und Feuchtigkeit aufweisen. Sperrschichten können -- neben den genannten Metallfolien -- beispielsweise Folien aus Kunststoffen, wie Polyvinylidenchlorid oder Ethyl-Vinyl-Alkohol, sein oder es kann eine Schicht aus keramischen Materialien, wie den Oxiden oder Nitriden des Siliciums oder Aluminiums, sein, die in dünner Schicht, z.B. im Bereich von 10 bis 500 Nanometer, in einem Vakuumdünnschichtverfahren auf eine Trägerfolie abgeschieden worden sind- Beispiele weiterer Sperrschichten sind metallische Schichten, z.B. aus Aluminium, die durch Sputtern auf dem Träger abgeschieden werden.

Auf der-- an dem späteren bedeckelten Behälter -- nach aussen weisenden Seite des Deckels kann eine Bedruckung angeordnet sein. Eine solche Bedrukkung kann ein Reklame-, Werbeoder Informationsaufdruck in Wort und/oder Bild usw. sein. Das Bedrucken des Trägermaterials kann mit allen bekannten Druckverfahren vorgenommen werden, so z.B. Buch-, Offset-, Flexo-, Sieb-, Helio- und Kupfertiefdruck. Die Wahl, welches Druckverfahren zur Anwendung kommt, hängt von der gewünschten Druckqualität, von den jeweiligen technischen Gegebenheiten und der Auflagenhöhe ab. Bevorzugt ist der Flexodruck (auch Anilinoder Gummidruck genannt) und der Tiefdruck, wie Kupfertiefdruck, oder der Heliodruck. Die Bedruckung auf der Aussenseite des Trägermaterials kann beispielsweise zusätzlich mittels eines Schutzlackes überlackiert sein oder mittels eines Kaschierhilfsmittels oder eines Klebstoffes kann weiterhin ein transparenter Film, beispielsweise aus Polyethylenterephthalat, Polyamid, Polyolefinen, wie Polyethylen oder Polypropylen oder einer Zellglasschicht, der dann jedoch im allgemeinen zur Verbesserung des Schutzes des Druckbildes im Konterdruck bedruckt wird, auf das Trägermaterial aufkaschiert werden. Die Bedruckung kann am Trägermaterial vor oder nach der Beaufschlagung mit der Siegelschicht erfolgen.

Das unbedruckte, wie auch das bedruckte, Trägermaterial ist insbesondere glatt und ungeprägt, resp. weist eine glatte Oberfläche ohne Prägung auf. Dadurch kommt die Bedruckung voll zur Geltung.

Die Siegelschicht kann einen thermoplastischen Kunststoff, beispielsweise aus der Reihe der Polyolefine und vorzugsweise Polyethylene oder Polypropylene oder Copolymere oder Terpolymere des Ethylens, z.B. Copolymere oder Terpolymere des Ethylens mit Acrylsäure (EAA, Ethyl Acrylic Acid), des Ethylens mit Acrylestern, wie Methylacrylat (EMA), Ethylacrylat (EEA) oder Butylacrylat (EnBA), des Ethylens mit Vinylacetaten (EVA), des Ethylens mit Methylacrylsäure (EMAA), des Ethylens mit Ethylacrylat und Acrylsäure (EAEAA) oder lonomerharze, allein oder im Gemsich, enthalten oder daraus bestehen. Die Siegelschicht kann auch einen der genannten thermoplastischen Kunststoffe und einen Haftvermittler oder Primer, beispielsweise aus der Reihe der Polyester oder der Vinylpolymere, enthalten. Die Siegelschichten können z.B. auch Polyester oder Polystyrole oder Polyamide oder deren Co- oder Terpolymere enthalten oder daraus bestehen.

Vorliegende Erfindung betrifft auch ein Verfahren zur Herstellung von Deckeln zum Verschliessen von Behältern mittels einer Siegelnaht, wobei die Deckel, bezogen auf einen Behälter an dem die Deckel angewendet werden, ein Trägermaterial, mit einer nach aussen weisenden Bedruckung, und eine nach innen weisende Siegelschicht enthalten.

Das Verfahren ist derart ausführbar, dass das Trägermaterial durch eine Extrusionsbeschichtung oder Coextrusionsbeschichtung mit einer die Siegelschicht bildende Extrusionsschicht (Extrusionsfilm) oder Coextrusionsschicht (Coextrusionsfilm) beaufschlagt wird und das beschichtete Trägermaterial zwischen einer Andruckwalze und einer Kühlwalze unter Druckbeaufschlagung hindurchgeführt wird, wobei das Trägermaterial gegen die Andruckwalze gerichtet ist und die Extrusionsschicht oder Coextrusionsschicht, d.h. die Siegelschicht, gegen die Kühlwalze gerichtet ist und sich die Oberflächenkonfiguration der Kühlwalze auf die Extrusionsbeschichtung oder Coextrusionsbeschichtung, d.h. die Siegelschicht, als Umkehrbild überträgt. Beispielsweise wird das Trägermaterial als Endlosmaterial von einer Rolle abgewickelt und über eine Andruckwalze geleitet. Im Bereich der Andruckwalze werden in einer oder auch mehrerer Extruderdüsen der oder die Filme der Siegelschicht erzeugt. Das Trägermaterial und/oder die Extrusionsschicht oder -schichten können zur Verbesserung der gegenseitigen Haftung einer Flamm-, Plasma-, Corona- oder Ozonbehandlung ausgesetzt werden. Der oder die extrudierten Filme folgen der Schwerkraft und schlagen sich auf dem kontinuierlich über die Andruckwalze laufenden Trägermaterial nieder. Die beaufschlagte Oberfläche der Andruckwalze ist im wesentlichen glatt, d.h. insbesondere ungeprägt und ohne Rauhigkkeitsmuster. Als Gegenwalze zur Andruckwalze ist die Kühlwalze in der Vorrichtung angeordnet. Die Oberfläche der Kühlwalze ist mit einer Prägung versehen. Das mit dem oder den extrudierten Filmen beaufschlagte Trägermaterial läuft zwischen der Andruckwalze und der mit der Prägung versehenen Kühlwalze durch. Die Oberfläche der Andruckwalze ist im wesentlichen glatt, resp. ohne Prägung oder dergl., und stützt das Trägermaterial, dessen freiliegende Seite demnach auch glatt bleibt, während die Kühlwalze auf den erstarrenden Extrusionsfilm, d.h. die Siegelschicht, das Prägemuster überträgt. Es resultiert ein Deckelmaterial dessen eine Seite, nämlich die Trägermaterialund bedruckte Seite, glatt und ungeprägt ist und dessen andere Seite, nämlich die Siegelschichtseite, ein Rauhigkeitsmusteroder Prägung aufweist. In anderen Worten, das Deckelmaterial, resp. die erfindungsgemässen Deckel daraus, weist übereinander auf: Fallweise ein Schutzlack oder eine Schutzfolie, eine Bedruckung und/oder Konterdruck, das eigentliche Trägermaterial und schliesslich die Siegelschicht aus einer Schicht aus thermoplastischem Kunststoff oder aus einer Schicht aus einem Haftvermittler und/oder Primer und einer Schicht aus thermoplastischem Kunststoff, wobei die freie Seite der Schicht aus thermoplastischem Kunststoff das Rauhigkeitsmusterzeigt. Angewendet als Dekkel weist die Siegelschicht insbesondere gegen den Behälterinnenraum und die Bedrukkung nach aussen. Aus dem Deckelmaterial, das wieder zu Rollenware aufgehaspelt werden kann, können durch Stanzen oder Ausschneiden die einzelnen Deckel gefertigt werden. Die Deckel können dann zu Deckelstapeln für z.B. die Verwendung in einer Abfüllmaschine aufgeschichtet werden.

Die Kühlwalze weist bevorzugt als Oberflächenkonfiguration ein Rauhigkeitsmuster mit einer Rauhtiefe von bis zu 50 µm, zweckmässig von 3 bis 30 µm, vorteilhaft von 3 bis 20 µm und insbesondere von 5 bis 10 µm, auf.

Das Rauhigkeitsmuster der Kühlwalze kann beispielsweise durch Schleifen, Funkenerosion, Prägen, Strahlen mit Hartstoffen usw., erzeugtwerden. Das Rauhigkeitsmuster soll vorteilhaft eine Rauhtiefe nicht überschreiten, die tiefer ist, als die Höhe der Siegelschicht. D.h. das Rauhigkeitsmuster soll die Siegelschicht nicht durchstossen und die Prägung nicht auch auf das Trägermaterial übertragen. Das Rauhigkeitsmuster der Kühlwalze kann beliebig sein und ein Zufallsmuster von Vertiefungen in der Fläche darstellen oder kann eine Würmchenprägung, Damastprägung, ein Linien- Strich- oder Punktmuster usw., sein.

Verwendung finden die erfindungsgemässen Deckeln aus einem Trägermaterial mit, bezogen auf Behälter an denen die Deckel angewendet werden, mit nach aussen weisender Bedruckung und einer nach innen weisenden Siegelschicht, zum Verschliessen von Behältern mit einem Schulterbereich, wobei der Deckel über die Siegelschicht im Schulterbereich am Behälter festgelegt wird. Solche Behälter sind wie beispielsweise tief oder streckgezogene oder gegossene, wie spritzgegossene, Behälter oder anderweitig geformte Behälter, deren Öffnung mit einer ebenen ringförmigen Schulter versehen ist. Die Behälter werden, insbesondere nach dem Befüllen, bedeckelt, wobei der Deckel vollflächig auf der Schulter aufliegt und beispielsweise durch Siegeln oder Kleben an der Schulter trennfest und dichtend befestigt wird. Solche Becher, Schalen, Menueschalen, beispielsweise mit einem oder mehreren Fächern, Gobelets, Kleinverpackungen usw. können beispielsweise zum Verpacken von Nahrungsmitteln aller Art, wie z.B. Milchprodukte, insbesondere Joghurt, Schlagsahne, Sauermilch, Sauerrahm, Kaffeesahne, Fertigzubereitungen von Salaten oder Halb- oder Vollkonserven, vorgekochten oder anderweitig vorbereiteten Gerichten, Getränke, wie Frucht- und Gemüsesäfte, Trinkwasser usw. verwendet werden.

Die vorliegenden Deckel können über die Siegelschicht auf den Behälterrand aufgesiegelt werden. Durch die Wahl des Siegelwerkzeuges, den Siegeldruck und die Siegeltemperatur kann die Festigkeit der Siegelnaht eingestellt werden. An der Siegelnaht können auch Anreisshilfen, beispielsweise in Form von schwächer gesiegelten Teilbereichen in der Siegelnaht oder durch zackenförmige Siegelnahtkanten, angebracht werden. Anstelle des Siegelns über die Siegelschicht kann auch eine Verklebung mit einem Klebstoff, wie einem Kontaktklebstoff oder einem unter Wärme und/oder Druck abbindenden Klebstoff, angewendet werden.

Vorliegendes Deckelmaterial hat den Vorteil, dass beispielsweise zur Erzeugung der Siegelschicht in Form einer Extrusionsschicht oder Coextrusionsschicht keine Lösungsmittel benötigt werden, die abgedampft und zurückgewonnen oder vernichtet werden müssen. Die Prägung an der Siegelschicht verhindert, dass die Deckel beim Vereinzeln aus dem Stapel gegenseitig aneinander haften. Damit werden die einseitig glatten und anderseitig eine Prägung aufweisenden erfindungsgemässen Deckel im Deckelstapel in Verpackungsmaschinen zuverlässig maschinengängig.

Die fertigen Deckel können im weiteren eine Aufreiss- oder Grifflasche und/oder Schwächungen, beispielsweise in Form von Perforationen oder Anreisskerben, aufweisen, welche das Öffnen des Behälters durch Entfernen des Deckels erleichtern.

## Patentansprüche

1. Deckel zum Verschliessen von Behältern mittels einer Siegelnaht, wobei die Dekkel, bezogen auf einen Behälter, an dem die Deckel angewendet werden, ein Trägermaterial, mit einer nach aussen weisenden Bedruckung, und eine nach innen weisende geprägte Siegelschicht enthalten,
**dadurch gekennzeichnet, dass**
die Siegelschicht eine durch Extrusionsbeschichtung oder Coextrusionsbeschichtung auf das Trägermaterial aufgebrachte Extrusionsschicht oder Coextrusionsschicht ist und die Siegelschicht an der freiliegenden Seite eine Prägung mit einer Rauhtiefe von bis zu 50 µm aufweist und die freiliegende, die Bedruckung zeigende, Seite des Trägermaterials glatt und ungeprägt ist.

2. Deckel nach Anspruch 1, **dadurch gekennzeichnet, dass** die Rauhtiefe 3 bis 30 µm, zweckmässig 3 bis 20 µm und vorteilhaft 5 bis 10 µm ist.

3. Deckel nach Anspruch 1, **dadurch gekennzeichnet, dass** die Siegelschicht eine Coextrusionsschicht aus einem Haftvermittler und/oder einem Primer und einem siegelbaren thermoplastischen Kunststoff enthält.

4. Deckel nach Anspruch 3, **dadurch gekennzeichnet, dass** die Siegelschicht siegelbare thermoplastische Kunststoffe aus der Reihe der Polyolefine, vorzugsweise Polyethylene oder Polypropylene, Co- oder Terpolymere des Ethylens oder Polyester oder Polystyrole oder Polyamide oder deren Co-oder Terpolymere enthält.

5. Deckel nach Anspruch 1, **dadurch gekennzeichnet, dass** das Trägermaterial ungeprägte thermoplastische Kunststoffe oder ein ungeprägtes Zellglas oder ein ungeprägtes cellulosehaltiges Material oder eine ungeprägte Metallfolie odereine Kombination dieser Materialien enthält.

6. Deckel nach Anspruch 5, **dadurch gekennzeichnet, dass** das Trägermaterial eine Kombination von wenigstens einem thermoplastischen Kunststoff und/oder einem Zellglas und/oder einem cellulosehaltigem Material und/oder einer Metallfolie in Form eines mehrschichtigen ungeprägten Verbundmaterials enthält.

7. Deckel nach Anspruch 6, **dadurch gekennzeichnet, dass** das Trägermaterial eine Sperrschicht gegen Gase, Dämpfe und Feuchtigkeit aus der Reihe der keramischen Schichten oder der metallisierten Schichten oder eines Kunststoff-Filmes oder einer Metallfolie enthält.

8. Deckel nach Anspruch 6, **dadurch gekennzeichnet, dass** die Siegelschicht ein Flächengewicht von 30 g/m² und kleiner, zweckmässig von 2 g/m² bis 20 g/m², vorteilhaft von 2 g/m² bis 15 g/m² und insbesondere von 5 g/m² bis 10 g/m² aufweist.

9. Deckel nach Anspruch 8, **dadurch gekennzeichnet, dass** die Siegelschicht ein Coextrudat ist, enthaltend einen Haftvermittler als Extrusionsschicht mit einem Flächengewicht von 2 bis 10g/m², zweckmässig von 2 g/m² bis 8 g/m², und eine Extrusionsschicht aus einem thermoplastischen Kunststoff mit einem Flächengewicht von 3 g/m² bis 25 g/m² und insbesondere von 5 g/m² bis 10 g/m².

10. Verfahren zur Herstellung von Deckeln zum Verschliessen von Behältern mittels einer Siegelnaht, wobei die Deckel, bezogen auf einen Behälter, an dem die Deckel angewendet werden, ein Trägermaterial, mit einer nach aussen weisenden Bedruckung, und eine nach innen weisende geprägte Siegelschicht enthalten,
**dadurch gekennzeichnet, dass**
das Trägermaterial durch eine Extrusionsbeschichtung oder Coextrusionsbeschichtung mit einer Extrusionsschicht oder Coextrusionsschicht unter Bildung der Siegelschicht beaufschlagt wird und das mit der Siegelschicht beschichtete Trägermaterial zwischen einer Andruckwalze und einer Kühlwalze unter Druckbeaufschlagung hindurchgeführt wird, wobei das Trägermaterial gegen die Andruckwalze gerichtet ist und die Extrusionsschicht oder Coextrusionsschicht gegen die Kühlwalze gerichtet ist und sich die Oberflächenkonfiguration der Kühlwalze auf die Extrusionsbeschichtung oder Coextrusionsbeschichtung unter Bildung einer geprägten Siegelschicht, als Umkehrbild, überträgt und die freiliegende, die Bedruckung zeigende, Seite des Trägermaterials glatt und ungeprägt ist.

11. Verfahren zur Herstellung von Deckeln nach Anspruch 12, **dadurch gekennzeichnet, dass** die Kühlwalze als Oberflächenkonfiguration ein Rauhigkeitsmuster mit einer Rauhtiefe von bis zu 50 µm, zweckmässig von 3 bis 30 µm, vorteilhaft von 3 bis 20 µm und insbesondere von 5 bis 10 µm, aufweist.

## Claims

1. Lids for closing containers by means of a sealed seam, the lids containing a carrier material with outwardly directed printing and an inwardly directed, embossed sealing layer in relation to a container to which the lids are applied, **characterised in that** the sealing layer is an extrusion layer or coextrusion layer applied to the carrier material by extrusion coating or coextrusion coating, the sealing layer is provided on the exposed side with an embossing with a roughness height of up to 50 µm, and the exposed side of the carrier material displaying the printing is smooth and unembossed.

2. Lids according to claim 1, **characterised in that** the roughness height is 3 to 30 µm, expediently 3 to 20 µm and advantageously 5 to 10 µm.

3. Lids according to claim 1, **characterised in that** the sealing layer contains a coextrusion layer consisting of an adhesion promoter and/or a primer and a heat-sealable thermoplastic.

4. Lids according to claim 3, **characterised in that** the sealing layer contains heat-sealable thermoplastics from the group consisting of polyolefins, preferably polyethylenes or polypropylenes, copolymers or terpolymers of ethylene or polyesters or polystyrenes or polyamides or copolymers or terpolymers thereof.

5. Lids according to claim 1, **characterised in that** the carrier material contains unembossed thermoplastics or an unembossed cellophane or an unembossed cellulose-containing material or an unembossed metal foil or a combination of these materials.

6. Lids according to claim 5, **characterised in that** the carrier material contains a combination of at least a thermoplastic and/or a cellophane and/or a cellulose containing material and/or a metal foil in the form of a multi-layer unembossed composite material.

7. Lids according to claim 6, **characterised in that** the carrier material contains a barrier layer against gases, vapours and moisture from the group consisting of ceramic layers or metallised layers or a plastic film or a metal foil.

8. Lids according to claim 6, **characterised in that** the sealing layer has a weight per unit area of 30 g/m² or less, expediently 2 g/m² to 20 g/m², advantageously 2 g/m² to 15 g/m² and, in particular 5 g/m² to 10 g/m².

9. Lids according to claim 8, **characterised in that** the sealing layer is a coextrudate, containing an adhesion promoter as an extrusion layer with a weight per unit area of 2 to 10 g/m², advantageously 2 g/m² to 8 g/m², and an extrusion layer consisting of a thermoplastic with a weight per unit area of 3 g/m² to 25 g/m² and in particular 5 g/m² to 10 g/m².

10. Process for the production of lids for closing containers by means of a sealed seam, the lids containing a carrier material with outwardly directed printing and an inwardly directed, embossed sealing layer in relation to a container to which the lids are applied, **characterised in that** an extrusion layer or coextrusion layer is applied to the carrier material by extrusion coating or coextrusion coating, thereby forming the sealing layer, and the carrier material coated with the sealing layer is guided between a pressure roll and a cooling roll with the application of pressure, the carrier material being directed towards the pressure roll, the extrusion layer or coextrusion layer being directed towards the cooling roll and the surface configuration of the cooling roll being transferred to the extrusion coating or coextrusion coating as a reversed image, thereby forming an embossed sealing layer, and the exposed side of the carrier material displaying the printing is smooth and unembossed.

11. Process for the production of lids according to claim 12, **characterised in that** the cooling roll has a surface configuration consisting of a roughness pattern with a roughness height of up to 50 µm, expediently 3 to 30 µm, advantageously 3 to 20 µm and, in particular 5 to 10 µm.

## Revendications

1. Couvercle pour l'obturation de récipients au moyen d'un cordon de scellement, ledit couvercle comprenant, en se référant à un récipient sur lequel on utilise le couvercle, un matériau de support présentant une impression tournée vers l'extérieur et une couche de scellement matricée tournée vers l'intérieur, **caractérisé en ce que** la couche de scellement est une couche d'extrusion ou de coextrusion appliquée sur le matériau de support par revêtement par extrusion ou par coextrusion, **en ce que** la couche de scellement présente sur le côté libre un matriçage avec une profondeur de rugosité allant jusqu'à 50 microns, , et **en ce que** le côté du matériau de support libre qui présente l'impression est lisse et non matricé.

2. Couvercle selon la revendication 1, **caractérisé en ce que** la profondeur de rugosité est de 3 à 30 microns, judicieusement de 3 à 20 microns et avantageusement de 5 à 10 microns.

3. Couvercle selon la revendication 1, **caractérisé en ce que** la couche de scellement contient une couche de coextrusion d'un matériau favorisant l'adhésion et/ou un apprêt et une matière thermoplastique susceptible d'être scellée.

4. Couvercle selon la revendication 3, **caractérisé en ce que** la couche de scellement contient des matières thermoplastiques susceptibles d'être scellées appartenant à la série des polyoléfines, de préférence polyéthylène ou polypropylène, copolymères ou terpolymères d'éthylène ou de polyester ou de polystyrène ou de polyamide, ou de leurs copolymères ou terpolymères.

5. Couvercle selon la revendication 1, **caractérisé en ce que** le matériau de support contient des matières thermoplastiques non matricées, ou un verre cellulaire non matricé, ou un matériau contenant de la cellulose non matricé, ou une feuille de métal non matricé, ou une combinaison de ces matériaux.

6. Couvercle selon la revendication 5, **caractérisé en ce que** le matériau de support contient une combinaison d'au moins une matière thermoplastique et/ou d'un verre cellulaire et/ou d'un matériau contenant de la cellulose et/ou d'une feuille de métal, sous la forme d'un matériau composite non matricé à plusieurs couches.

7. Couvercle selon la revendication 6, **caractérisé en ce que** le matériau de support contient une couche de blocage à l'encontre des gaz, des vapeurs et de l'humidité, appartenant à la série des couches en céramique ou des couches métallisées ou d'un film en matière plastique ou d'une feuille de métal.

8. Couvercle selon la revendication 6, **caractérisé en ce que** la couche de scellement présente un poids superficiel de 30 g/m² et moins, judicieusement 2 g/m² à 30 g/m², avantageusement 2 g/m² à 15 g/m² et en particulier de 5 g/m² à 10 g/m².

9. Couvercle selon la revendication 8, **caractérisé en ce que** là couche de scellement est obtenue par coextrusion, et contient un agent favorisant l'adhésion à titre de couche d'extrusion avec un poids superficiel de 2 à 10 g/m² et judicieusement de 2 g/m² à 8 g/m², et une couche d'extrusion en matière thermoplastique avec un poids superficiel de 3 g/m² à 25 g/m² et en particulier de 5 g/m² à 10 g/m².

10. Procédé pour la fabrication de couvercles pour l'obturation de récipients au moyen d'un cordon de scellement, dans lequel le couvercle, par référence à un récipient sur lequel on utilise de couvercle, contient un matériau avec une impression tournée vers l'extérieur et une couche de scellement matricée tournée vers l'intérieur, **caractérisé en ce que** le matériau de support est pourvu par revêtement par extrusion ou par coextrusion d'une couche d'extrusion ou de coextrusion en formant la couche de scellement, **en ce que** le matériau de support revêtu de la couche de scellement est passé entre un cylindre de pressage et un cylindre de refroidissement avec application de pression, de sorte que le matériau de support est tourné vers le cylindre de pressage et que la couche d'extrusion ou de coextrusion est tournée vers le cylindre de refroidissement, et **en ce que** la configuration de surface du cylindre de refroidissement est transférée au revêtement d'extrusion ou de coextrusion en formant une couche de scellement matricée, sous forme d'une image inversée, et **en ce que** le côté du matériau de support libre qui présente l'impression est lisse et non matricé.

11. Procédé pour la fabrication de couvercle selon la revendication 12, **caractérisé en ce que** le cylindre de refroidissement présente à titre de configuration de surface un motif de rugosité avec une profondeur de rugosité allant jusqu'à 50 microns, judicieusement de 3 à 30 microns, avantageusement de 3 à 20 microns et en particulier de 5 à 10 microns.
